# DEMANDE DE BREVET EUROPEEN

(11) **EP 0 521 756 A1**
(43) Date de publication de la demande: **07.01.1993**
(21) Numéro de dépôt: 92401807.0
(22) Date de dépôt: 25.06.1992
(51) Int. Cl.: B60H 1/00

(54) **Dispositif automatique de climatisation de l'habitacle d'un véhicule automobile**

(30) Priorité: 03.07.1991 FR 9108318
(71) Demandeur: AUTOMOBILES PEUGEOT, F-75116 Paris (FR); AUTOMOBILES CITROEN, F-92200 Neuilly sur Seine (FR)
(72) Inventeur: Baur, Michel, F-78140 Velizy (FR)
(74) Mandataire: Durand, Yves Armand Louis

(57) **Abrégé**

La présente invention se rapporte à un dispositif automatique de climatisation d'un habitacle de véhicule.

Ce dispositif comprend un pulseur d 'air (410) et un ou deux échangeurs thermiques (411) reliés à des circuits (312, 313, 314) qui débouchent dans des ouies (312, 313, 314) qui débouchent dans des ouies d'aération réparties dans l'habitacle (11) pour fournir un air conditionné suivant des valeurs de consigne, des volets de sélection pour faire varier la distribution de l'air dans l'habitacle, ce dispositif (300) étant commandé par un calculateur (200) qui comporte des moyens de calcul connectés à un organe de mesure de la température extérieure (611) et à des moyens de correction, de sorte que les valeurs de la tension d'alimentation du pulseur (410) et pour la position des volets (512, 513, 514) sont déterminées par les moyens de calcul à partir de la température extérieure, puis sont ajustées par les moyens de correction en fonction de l'état des paramètres indiqué par les capteurs.

L'invention s'applique à l'industrie de la fabrication de véhicules automobiles de tous types.

## Description

La présente invention se rapporte à un dispositif de climatisation de l'habitacle d'un véhicule automobile, et concerne plus particulièrement un dispositif automatique de climatisation dont le fonctionnement est géré notamment en fonction de la température extérieure.

On a déjà décrit dans l'art antérieur un dispositif de climatisation de l'habitacle d'un véhicule automobile, du type comprenant des circuits d'amenée d'air reliés d'une part soit à une prise d'air extérieur, soit à une conduite de recirculation, et débouchant d'autre part dans des ouies d'aération réparties dans l'habitacle du véhicule. Un pulseur d'air et un ou deux échangeurs thermiques sont prévus dans les circuits pour fournir aux ouies d'aération de l'air climatisé permettant d'atteindre dans l'habitacle une température définie par l'utilisateur et dite température de consigne. Le plus souvent, chaque ouie d'aération est équipée d'un volet de sélection apte à ouvrir ou obturer cette ouie. Le pulseur, l'échangeur ainsi que les volets de sélection sont commandés par un calculateur raccordé à des capteurs sensibles à différents paramètres de la climatisation, de manière à gérer le fonctionnement de cette dernière d'après ces paramètres.

Généralement, un tel dispositif fonctionne de façon satisfaisante tant que la température extérieure est proche de la température de consigne. Par contre, lorsqu'il existe une différence importante entre ces deux températures, le dispositif met un certain temps à effectuer l'apport en calories ou frigories nécessaire pour amener la température à l'intérieur de l'habitacle jusqu'à la température de consigne.

Similairement, lorsqu'un écart important entre la température intérieure et la température de consigne s'établit, par exemple suite à l'ouverture d'une portière, les dispositifs connus mettent un temps assez long pour réétablir la température de consigne dans l'habitacle.

Par ailleurs, on sait que le débit en aval du pulseur varie en fonction de la vitesse du véhicule de sorte que dans les dispositifs de l'art antérieur, le débit d'air dans l'habitacle varie de façon indésirable avec les changements de vitesse du véhicule.

En outre, les dispositifs connus ne prennent sensiblement pas en compte les effets du rayonnement solaire dans le spectre infrarouge sur la sensation de confort des passagers. De fait, ceux-ci doivent recourir à des réglages manuels du débit d'air dans l'habitacle pour obtenir la sensation de confort qu'ils désirent.

La présente invention a pour but de proposer un dispositif de climatisation qui pallie tous les inconvénients des dispositifs de l'art antérieur qui viennent d'être énoncés, et qui de plus intègre les réglages manuels dans le calcul de l'ajustement de la climatisation.

A cet effet, l'invention a pour objet un dispositif automatique de climatisation d'un habitacle de véhicule automobile, du type comprenant des circuits d'amenée d'air débouchant dans des ouies d'aération réparties à l'intérieur de l'habitacle, un pulseur d'air et un échangeur thermique pour fournir à l'habitacle de l'air climatisé à une température de consigne, au moins l'une des ouies comportant un volet de sélection pouvant ouvrir ou obturer cette ouie, ainsi qu'un calculateur relié à des capteurs indiquant l'état de paramètres de la climatisation et à une interface de commande des volets de sélection, d'un moteur du pulseur et de l'échangeur de façon à maintenir l'air climatisé à la température de consigne d'après l'état desdits paramètres, caractérisé en ce que le calculateur comporte des moyens de calcul connectés à un organe de mesure de la température extérieure et à des moyens de correction, ces moyens de correction étant reliés aux capteurs et à ladite interface de commande de sorte que les valeurs pour la tension d'alimentation du moteur de pulseur et pour la position des volets de sélection sont déterminées par les moyens de calcul à partir de la température extérieure, puis sont ajustées par les moyens de correction en fonction de la température de consigne et de l'état des paramètres indiqué par les capteurs.

L'invention est encore caractérisée en ce que le calculateur comporte une première unité de mémoires raccordée à un capteur de température intérieure et à une seconde unité de mémoires des moyens de correction, les valeurs de la température intérieure et un programme apte à déterminer l'écart entre les trempératures de consigne et intérieure, ainsi qu'une loi de variation de cet écart étant respectivement emmagasinés dans les première et seconde unités afin que les moyens de correction ajustent la tension d'alimentation du moteur en fonction desdits écarts et loi de variation.

Le dispositif conforme à l'invention se caractérise en ce qu'un capteur de vitesse du véhicule est raccordé à la première unité de mémoires, une loi de variation de la tension du moteur suivant la vitesse mémorisée étant emmagasinée dans la seconde unité pour que les moyens de correction ajustent la tension du pulseur pour que le débit d'air choisi reste constant quelle que soit la vitesse du véhicule.

Le dispositif se caractérise encore en ce que la première unité de mémoires est raccordée à un capteur d'énergie apte à mesurer le niveau énergétique infrarouge du rayonnement solaire et la seconde unité comporte en mémoire une loi de variation de la tension du moteur suivant le niveau énergétique infrarouge mesuré, en fonction de laquelle loi les moyens de correction ajustent ladite tension.

On précisera encore ici que la première unité de mémoires qui est connectée au capteur d'énergie est également reliée à un capteur de température d'air pulsé, et la seconde unité comporte en mémoire des tables ou lois de changement des positions des volets de sélection suivant la température de l'air pulsé et l'énergie mesurées par lesdits capteurs pour que les moyens de correction ajustent la position des volets en fonction de ces paramètres.

En outre, le dispositif est caractérisé en ce qu'il comporte des moyens de réglage manuel du débit et de la position des volets de sélection qui sont raccordés aux moyens de correction précités par l'intermédiaire d'une troisième unité de mémoires, de sorte que les réglages effectués manuellement sont mémorisés dans ladite troisième unité.

Suivant une autre caractéristique de l'invention, ladite troisième unité de mémoires est constituée par un support à mémoires séparable du calculateur et raccordé au calculateur à l'aide des moyens de lecture et d'écriture sur un tel support séparable.

Suivant encore une autre caractéristique de l'invention, le calculateur comporte des moyens pour extrapoler, d'après différents réglages manuels emmagasinés dans la troisième unité de mémoires, une valeur de réglage à fournir aux moyens de correction pour que ceux-ci ajustent automatiquement la tension du moteur du pulseur et la position des volets de sélection en fonction de l'état des paramètres et de ladite valeur extrapolée.

Mais d'autres caractéristiques et avantages de l'invention ressortiront mieux de la description détaillée, donnée uniquement à titre d'exemple, qui suit et se réfère aux dessins annexés dans lesquels :
La figure 1 est une vue schématique en coupe longitudinale d'un véhicule équipé du dispositif automatique de climatisation conforme à l'invention ;
La figure 2 est un diagramme illustrant l'enchaînement des différents programmes, lois et tables suivant lesquels le dispositif conforme à l'invention ajuste la climatisation ;
La figure 3 est une vue de face d'un tableau de commande pour un dispositif de climatisation conforme à l'invention ;
La figure 4 est un diagramme illustrant le procédé d'extrapolation des valeurs de réglage de la climatisation qui est effectuée par le dispositif conforme à la présente invention.

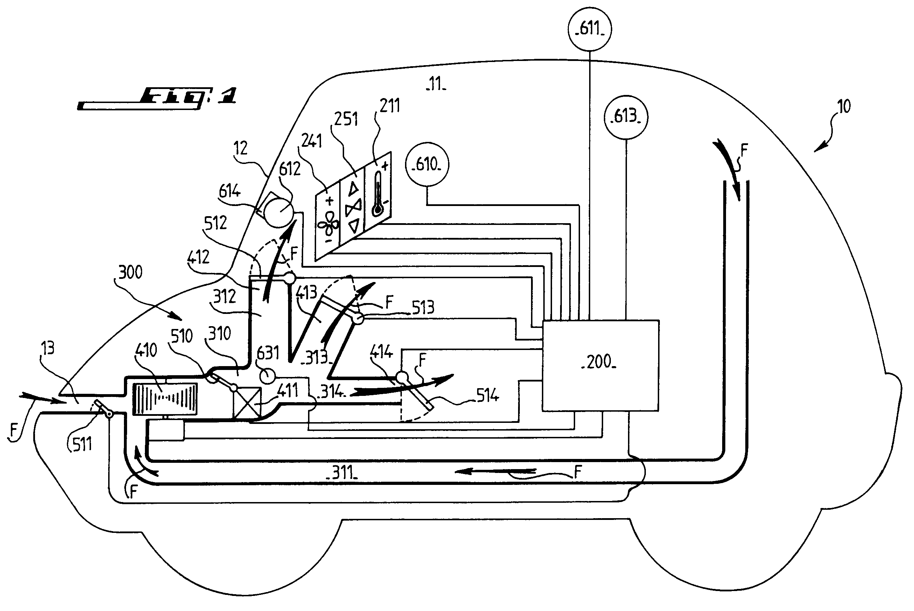

En se reportant à la figure 1, on voit un véhicule automobile 10, qui comprend un habitacle 11, un pare-brise 12 et une prise d'air extérieur 13.

La prise d'air 13 est raccordée à un dispositif de climatisation de l'habitacle 11 qui est désigné par la référence numérique générale 300. Le dispositif 300 comprend une veine principale 310 dans laquelle débouche la prise d'air 13 ainsi qu'un conduit de recyclage 311 de l'air de l'habitacle 11. Des conduits d'amenée d'air 312, 313 et 314 raccordent la veine principale 310 à l'habitacle 11.

Les conduites 312, 313 et 314 débouchent respectivement dans des ouies d'aération 412, 413 et 414 réparties dans l'habitacle du véhicule 10. Chaque ouie d'aération 412, 413 et 414 comporte un volet de sélection 512, 513 et 514, respectivement. Les volets de sélection 512, 513 et 514 permettent d'obturer ou d'ouvrir les ouies correspondantes afin de répartir la distribution d'air dans l'habitacle. Similairement, la prise d'air 13 est équipée d'un volet d'obturation 511 grâce auquel le dispositif 300 peut être réglé entre un mode recyclage ou un mode circulation ouverte.

Un pulseur d'air 410 entraîné par un moteur électrique ainsi qu'un ou deux échangeurs thermiques 411 sont installés dans la veine principale 310, en aval de la prise d'air 13 et du conduit de recyclage 311, suivant le sens de circulation de l'air indiqué par les flèches F sur la figure 1. On remarque également sur cette figure un volet mitigeur 510 disposé dans la veine 310 de façon à faire varier la quantité d'air qui traverse le ou les échangeurs 411. Le pulseur d'air 410 et l'échangeur 411 sont disposés de façon à fournir à l'habitacle 11 de l'air climatisé à une température choisie dite de consigne, en agissant respectivement sur le débit et sur la température du flux d'air F pulsé vers les ouies 412, 413 et 414.

Sur la figure 1, la référence 200 désigne un calculateur permettant de commander ou gérer le dispositif de climatisation 300. Plus précisément, le calculateur 200 gère, par l'intermédiaire d'une interface de commande (non représentée), le moteur du pulseur 410, l'échangeur 411, ainsi que les mécanismes de déplacement des différents volets de sélection 512, 513 et 514, d'obturation 511 et de mitigeage 510.

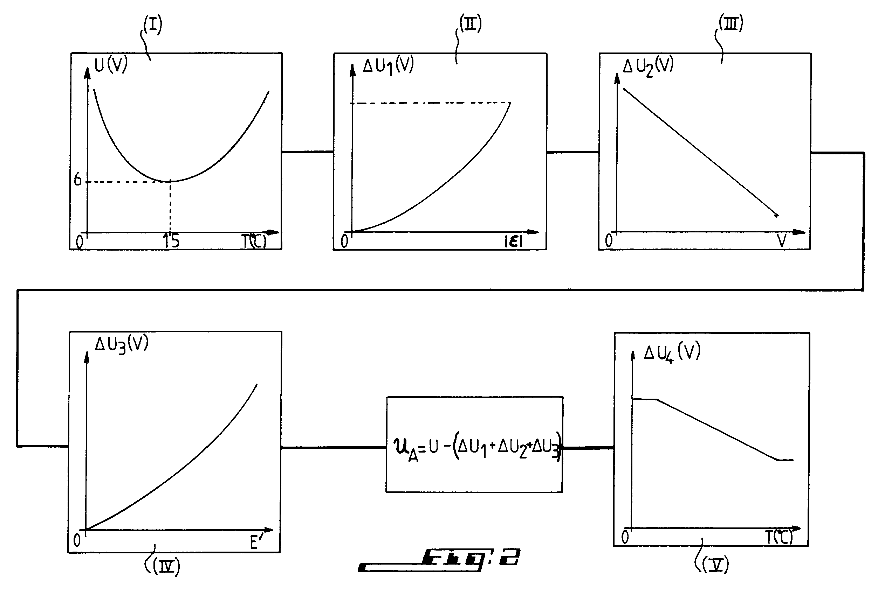

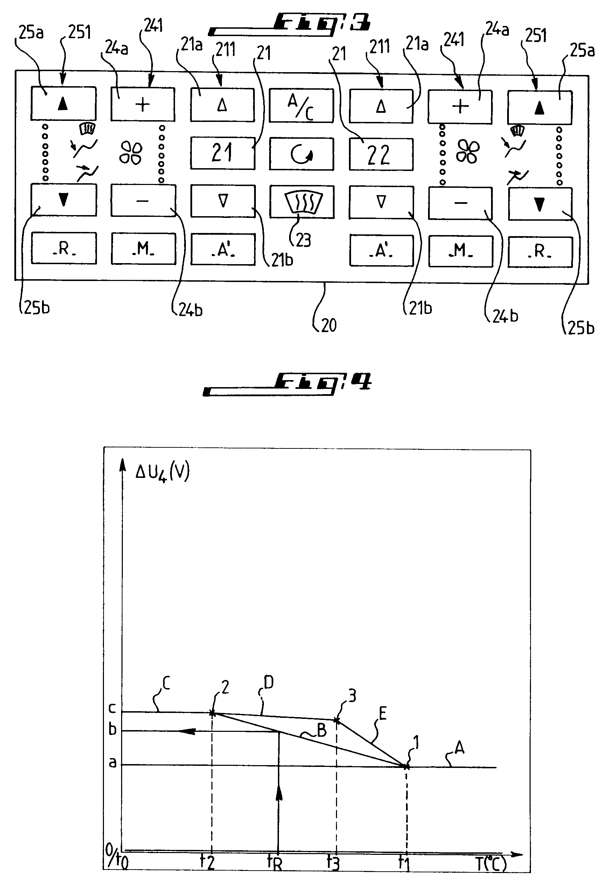

Le calculateur 200 est relié à un tableau de commande 20 (figure 3) du dispositif 300, ainsi qu'à des capteurs ou analogues, sensibles à divers paramètres de la climatisation, afin de maintenir, d'après les signaux fournis par le tableau de commande 20 et par les capteurs, l'air climatisé à une température sensiblement égale à la température de consigne. Le tableau de commande 20 comporte notamment un organe de commande 241 agissant sur le moteur du pulseur 410, un organe de commande 251 permettant de faire varier la distribution d'air climatisé dans l'habitacle, et un organe de commande 211 apte à ajuster la température de consigne.

Conformément à l'invention le calculateur 200 comporte des moyens de calcul (non représentés) connectés à un organe de mesure de la température extérieure 611, pour que la tension de l'alimentation (U) (figure 2) du moteur de pulseur 410 et la position des volets de sélection 512, 513 et 514 soient déterminées généralement à partir de la valeur de la température extérieure qui est délivrée aux moyens de calcul par le capteur 611. Suivant l'exemple illustré, le capteur de température 611 est une sonde de température constituée par une thermistance qui délivre une tension en fonction de sa tension d'alimentation ou de référence et de la température extérieure. Le signal ainsi formé par le capteur 611 est délivré au moyen de calcul par l'intermédiaire par exemple d'un convertisseur analogique/numérique, afin que le calculateur 200 puisse traiter les données fournies par ce capteur.

On comprend déjà que grâce au capteur 611, le dispositif 300 peut effectuer très rapidement l'apport en calories ou en frigories nécessaire pour ajuster la température à l'intérieur de l'habitacle 11, en agissant sur le débit généré par le pulseur 410 et/ou sur la température de l'air en sortie de la veine principale 310 où est disposé l'échangeur 411. De même, la distribution de l'air climatisé dans l'habitacle sera déterminée à partir des signaux fournis par le capteur 611.

Bien que ceci ne soit pas représenté sur les figures, le calculateur 200 comporte des moyens de correction qui sont raccordés d'une part aux moyens de calcul décrits plus haut, et d'autre part à l'entrée de l'interface de commande, de façon que les valeurs de la tension d'alimentation du moteur de pulseur 410 et de la position des volets de sélection 512, 513 et 514 déterminées par les moyens de calcul soient ensuite ajustées par ces moyens de correction, en fonction de l'état des paramètres de la climatisation.

Pour ce faire, les moyens de correction sont raccordés à un capteur de vitesse du véhicule 610, à un capteur de température de l'air pulsé 631, à un organe de mesure de l'énergie de rayonnement solaire dans le spectre infrarouge 612, et à un capteur de température intérieure 613. Ces différents organes et capteurs seront décrits plus en détail ultérieurement.

A l'instar de ce qui a été expliqué plus haut, les moyens de calcul et de correction sont raccordés aux différents organes et capteurs par l'intermédiaire de convertisseurs analogique/numérique, afin qu'ils puissent traiter les données fournies par ces derniers. On comprend bien que le calculateur 200 a la forme d'un ordinateur dans lequel les moyens de traitement peuvent être constitués par tous composants appropriés, tels que des micro-processeurs, CPU ou analogues.

De même, une fois que les moyens de calcul et de correction ont défini des valeurs appropriées pour la tension d'alimentation du pulseur 410 et pour la position du volet de sélection 512, 513 et 514, ceux-ci fournissent à l'interface de commande un signal de forme numérique qui peut être converti en signal analogique pour commander le pulseur 410 et les volets de sélection.

De plus, le calculateur 200 comporte une première unité de mémoires, dans lequel une section de mémoires par exemple constituée par une mémoire vive ou "RAM" est reliée au capteur de température intérieure 613. Cette section de mémoires emmagasine les valeurs de température à l'intérieur de l'habitacle qui lui sont fournies par le capteur 613, celui-ci étant constitué par une sonde ou thermistance ventilée, disposée à l'intérieur de l'habitacle 11.

La première unité de mémoires est également raccordée à une seconde unité de mémoires qui fait partie des moyens de correction et qui est reliée à l'organe de commande 211. Cette seconde unité de mémoires comprend par exemple une mémoire morte (ROM) ou programmable (EPROM), dans laquelle est inscrit un programme apte à déterminer un écart entre la température de consigne définie par l'organe de commande 211 et la température intérieure mesurée par le capteur 613. Le programme emmagasiné dans la seconde unité de mémoires est également prévu pour déterminer la loi de variation de l'écart entre les températures de consigne et intérieure.

Grâce à l'agencement qui vient d'être décrit, les moyens de correction qui sont reliés à une sortie des moyens de calcul peuvent ajuster la valeur déterminée par ces derniers pour la tension d'alimentation de moteur de pulseur 410, en fonction de l'écart entre les températures de consigne et intérieure, ainsi qu'en fonction de la loi de variations de cet écart. Autrement dit, conformément à l'invention, la valeur de la tension d'alimentation du moteur de pulseur est dans un premier temps évaluée d'après la température extérieure, puis la valeur déterminée par les moyens de calcul est ajustée ou affinée par les moyens de correction, en fonction des températures intérieure et de consigne. Ainsi, les conditions choisies de confort dans l'habitacle 11 peuvent être établies très rapidement par le dispositif 300, même s'il existe un écart important entre la température extérieure ou la température intérieure et la température de consigne.

Le capteur de vitesse 610 qui est de type conventionnel tel qu'un tachymètre relié aux roues du véhicule 10, est aussi raccordé à une section de la première unité de mémoires, de façon que celle-ci mémorise les valeurs mesurées de la vitesse de déplacement du véhicule 10. La seconde unité de mémoires comporte une section de mémoire dans laquelle est emmagasinée une loi de variation de la tension du moteur du pulseur 410, suivant la vitesse du véhicule.

Comme ceci sera mieux expliqué ultérieurement en se reportant à la figure 2, la première unité de mémoires fournit à la seconde unité un signal numérique représentatif de la vitesse mesurée du véhicule 10, suite à quoi une valeur de correction de la tension d'alimentation du pulseur 410 est déterminée d'après la loi de variation emmagasinée dans la seconde unité. Cette valeur de correction permet aux moyens de correction d'ajuster la tension du pulseur de façon que le débit d'air approprié qui a été choisi reste constant, quelle que soit la vitesse du véhicule 10.

On remarque sur la figure 1 que le capteur 612 qui est disposé dans l'habitacle 11 du véhicule 10, est constitué par une photodiode montée sur la planche de bord du véhicule, de manière à être en regard de la base du pare-brise 12. Un filtre 614 interrompant tout rayonnement dans le spectre visible est monté sur la photodiode 612, de façon à ne laisser passer vers celle-ci que le rayonnement solaire dans le spectre infrarouge. Le niveau énergétique de ce rayonnement infrarouge est mesuré par le capteur 612 qui délivre alors un signal correspondant. Le signal du capteur 612 est fourni à une section de mémoire de la première unité, à laquelle une section de la seconde unité de mémoires est raccordée. D'après la valeur du dernier signal emmagasiné dans la première unité et une loi de variation de la tension du pulseur 410 qui est mémorisée dans la seconde unité (voir diagramme IV, figure 2), les moyens de correction déterminent une valeur d'ajustement à appliquer à l'alimentation du pulseur 410. Ainsi, ledit air pulsé dans l'habitacle 11 est ajusté pour que la sensation de confort des passagers ne soit pas altérée par le rayonnement solaire qui peut produire une impression de chaleur désagréable.

Comme visible sur la figure 1, le calculateur 200 est relié à un capteur 631 qui est disposé dans la veine principale 310, en aval du pulseur 410 et de l'échangeur 411. Ce capteur qui est par exemple constitué par une thermistance permettant de mesurer la température de l'air pulsé par le dispositif 300 dans l'habitacle 11, est raccordé à une section de mémoire de la première unité.

Ainsi, les valeurs de la température de l'air pulsé sont emmagasinées dans la première unité de mémoires, et sont fournies à une section de la seconde unité de mémoires à laquelle le capteur d'énergie 612 est également raccordé par l'intermédiaire de la première unité.

Les valeurs mesurées par les capteurs 631 et 612 sont donc emmagasinées dans des sections respectives de la première unité de mémoires, puis sont fournies à la section citée plus haut de la seconde unité, dans laquelle est inscrite une table ou loi de changement de la position des volets de sélection 512, 513 et 514 en fonction de la température de l'air pulsé ainsi que du niveau énergétique mesuré.

Les moyens de correction peuvent alors déterminer une correction à appliquer au signal de positionnement des volets de sélection défini par les moyens de calcul, en se basant sur les résultats fournis par la table mémorisée dans la seconde unité. Autrement dit, les moyens de calcul déterminent une position des volets de sélection d'après la température extérieure, similairement à la manière dont est déterminée la tension U du pulseur, et cette position est ajustée par les moyens de correction, en fonction des paramètres fournis à la seconde unité de mémoires par les capteurs 612 et 631.

Les références numériques 241 et 251 sur la figure 1 notamment, indiquent respectivement des moyens de réglage manuel du débit d'air et de la position des volets de sélection 512, 513 et 514. Ces moyens de réglage sont disposés dans l'habitacle 11 du véhicule, sur le tableau de commande 20 du dispositif 300. Ces moyens de réglage manuel 241 et 251 sont raccordés aux moyens de correction du calculateur 200 et sont actionnés manuellement pour indiquer une correction propre à l'utilisateur. Plus précisément, le moyen de réglage 241 fournit aux moyens de correction un signal en fonction duquel la tension d'alimentation du pulseur 410 est augmentée ou diminuée. Similairement, le moyen 251 fournit un signal d'après lequel la distribution d'air -c'est-à-dire la position des volets 512, 513 et 514- dans l'habitacle 11 est changée.

Les moyens de réglage 241, 251 sont reliés aux moyens de correction du calculateur 200 par l'intermédiaire d'une troisième unité de mémoires. Ainsi, les corrections manuelles appliquées au dispositif 300 sont gardées en mémoire de façon à pouvoir être utilisées en permanence par les moyens de correction pour ajuster la tension d'alimentation du pulseur et la position des volets de sélection, en fonction des indications de l'utilisateur.

Bien que ceci n'est pas illustré, la troisième unité de mémoires peut être constituée par un support séparable du calculateur 200, tel que par exemple une carte à puce. Dans ce cas, des moyens de lecture et d'écriture (non représentés) sur une telle troisième unité de mémoires séparable doivent être prévus pour que les moyens de correction puissent utiliser des données emmagasinées sur ce support, afin d'ajuster le débit et la distribution d'air de l'habitacle. Une telle unité de mémoire sur support séparable permet d'emmagasiner les valeurs de divers réglages propres à différents utilisateurs, de sorte que le calculateur 200 peut ajuster instantanément les paramètres de la climatisation aux conditions de confort de chaque utilisateur. Les moyens d'écriture permettent à un nouvel utilisateur d'enregistrer sur un support séparable ses propres réglages, ou de modifier les réglages précédemment emmagasinés sur un tel support.

Le calculateur comporte également des moyens pour extrapoler, d'après différents réglages manuels emmagasinés dans la troisième unité de mémoires, des valeurs de réglage à fournir aux moyens de correction pour que ceux-ci ajustent automatiquement la tension du pulseur 410 et la position des volets 512, 513 et 514.

Sur la figure 4, on voit un diagramme illustrant la manière dont ces moyens extrapolent les valeurs d'ajustement de la tension du pulseur 410 en fonction des réglages manuels et de la température extérieure mesurée. Suivant cet exemple, le premier réglage saisi par la troisième unité de mémoire est indiqué en "1" et correspond au débit choisi par l'utilisateur pour une température extérieure égale à t₁. Si ce réglage manuel est le seul à être mémorisé, les moyens d'extrapolation fourniront aux moyens de correction un signal correspondant à la valeur "a" (ligne A) pour la valeur d'ajustement ΔU₄ de la tension du pulseur 410, quelle que soit la température extérieure mesurée par le capteur 611. Similairement, si une seule correction est mesurée pour la position des volets de sélection, les moyens d'extrapolation fourniront aux moyens de correction un signal constant, quelle que soit la valeur de la température extérieure.

Dans le cas où l'utilisateur mémorise un second réglage manuel "2" correspondant au débit désiré pour une température extérieure t₂, les moyens d'extrapolation vont définir une courbe des valeurs de ΔU₄ (en volts) qui relie les points 1 et 2. Sur la figure 4, cette courbe est constituée par trois sections de droite A, B et C. La première section A qui définit les valeurs extrapolées d'ajustement du débit lorsque la température extérieure est supérieure à t₁ possède une ordonnée constante égale à "a". La deuxième section B est une droite reliant les points 1 et 2. La section C permet d'extrapoler la valeur de ΔU₄ lorsque la température extérieure est comprise entre t₁ et t₂. La section C indique les valeurs extrapolées de ΔU₄ pour des températures extérieures inférieures à t₂. Sur le diagramme de la figure 4, la valeur de ΔU₄ définie par la section C est constamment égale à "c". Bien que sur les figures les valeurs de réglage sont reliées par des droites, une autre solution consisterait à construire des courbes à partir des coordonnées barycentriques des points saisis par l'utilisateur.

Il est préférable toutefois de limiter le nombre de valeurs de réglage mémorisées, par exemple à trois comme illustré sur la figure 4 par les sections de droite A, E, D et C. Dans le cas où le nombre de correction mémorisable et limité, chaque fois qu'une nouvelle correction sera introduite par l'utilisateur, les moyens d'extrapolation élimineront de la mémoire la correction la plus proche, et la remplaceront dans la troisième unité de mémoire par la nouvelle correction choisie.

On a représenté sur la figure 3 un tableau de commande 20 pour une climatisation de véhicule automobile. On remarque que ce tableau 20 comporte notamment deux séries d'organes de commande 241, 211 et 251, et permet donc de gérer une climatisation comportant deux dispositifs tels que celui décrit précédemment (réglage droite/gauche séparé extensible à un réglage avant/arrière).

Chaque organe de commande 211 de la température de consigne comprend un affichage 21, par exemple à cristaux liquides, de la température de consigne choisie, et deux boutons de commande 21a, 21b raccordés au calculateur 200. Le calculateur 200 définit une température initiale de consigne, de préférence égale à 22°C, qui peut être augmentée en agissant sur le bouton 21a ou diminuée en agissant sur le bouton 21b. La température initiale ou choisie est indiquée en permanence sur l'affichage 21. En cas de remise en marche du dispositif après une mise au repos, la température de consigne affichée sera la dernière température mémorisée par les premiers moyens de mémoires, sauf si entre-temps (24 heures environ) la température extérieure a changé de plus de 10°C par exemple. Evidemment, une température de consigne propre à chaque utilisateur peut être mémorisée sur la troisième unité de mémoires séparable, au lieu d'être enregistrée dans la première unité. On comprend donc que si la troisième unité de mémoires n'est pas du type séparable décrit plus haut, les première et troisième unités peuvent être regroupées dans une seule et même structure.

Similairement à ce qui vient d'être décrit, les boutons 24a, 25a permettent respectivement d'augmenter le débit du pulseur 410 et de déplacer la distribution d'air vers le haut, et les boutons 24b, 25b ont pour but respectivement de réduire le débit et de faire varier la distribution d'air vers le bas.

Sur la figure 3, les touches R sont des boutons de commande qui permettent d'effacer tous les réglages manuels précédemment mémorisés et les touches M placent la troisième unité de mémoires en mode enregistrement, pour permettre la saisie de nouveaux réglages manuels définis à l'aide des organes 241, 251. Le bouton 23 permet quant à lui de placer la climatisation sous un mode "visibilité", suivant lequel l'ensemble de l'air climatisé est dirigé vers le pare-brise 12, au travers des ouies 412. Les touches A′ permettent de placer le dispositif en mode tout automatique.

En se reportant à la figure 2, un exemple de fonctionnement du dispositif 300 et du calculateur 200 va maintenant être expliqué.

Comme indiqué plus haut, lors de la mise sous tension du dispositif, le calculateur 200 lit le signal délivré par le capteur de température extérieure 611 et fournit ce dernier aux moyens de calcul. Les moyens de calcul définissent alors une valeur générale U de la tension à appliquer au pulseur 410, en fonction d'une loi emmagasinée dans la seconde unité de mémoires. Sur la figure 2, le diagramme (I) illustre un exemple de loi utilisée par les moyens de calcul pour définir la tension U (en volts) en fonction de la température extérieure T (en °C). Sur le diagramme (I), la loi est représentée par une parabole sensiblement centrée sur un point indiquant que pour une température extérieure T de 15°C, la tension d'alimentation du pulseur 410 est à son minimum, c'est-à-dire 6 volts. Les moyens de calcul procèdent évidemment à une détermination similaire de la position des volets de sélection 512, 513 et 514 en fonction de la température extérieure T mesurée par un capteur 611.

Les moyens de calcul fournissent alors aux moyens de correction un signal numérique indiquant le débit et la distribution d'air dans l'habitacle 11 qui ont été définis en fonction de la température extérieure. Sur la base des données fournies par les moyens de calcul, les moyens de correction vont successivement ajuster les valeurs de la tension d'alimentation du pulseur et des positions des volets de sélection.

Suivant l'exemple illustré sur la figure 2, le débit défini par les moyens de calcul est tout d'abord ajusté en fonction de la température de consigne et de la température à l'intérieur de l'habitacle mesurée par le capteur 613. Plus précisément, les valeurs instantanées des températures de consigne et intérieures sont emmagasinées dans une section de la première unité de mémoires, suite à quoi un signal numérique est fournit à la seconde unité de mémoires des moyens de correction, dans laquelle un programme apte à déterminer l'écart entre des températures de consigne et intérieures ainsi qu'à déterminer la loi de variation de cet écart est emmagasinée. Sur le diagramme (II), la valeur absolue |ε| de l'écart permet de définir une valeur d'ajustement ΔU1 (en volts) à appliquer à la tension d'alimentation du moteur de pulseur 410. On voit que Δ41 est égal à 0 si /ε/ est égal à 0 et que Δ41 ne peut pas dépasser 2V. La loi de variation de ΔU1 en fonction de /ε/ est ici définie par une courbe concave croissante.

Suivant le mode de réalisation en question, la valeur corrigée par les moyens de correction en fonction de ΔU1 de la tension U généralement définie par les moyens de calcul est ensuite ajustée en fonction de la vitesse V du véhicule 10, mesurée par le capteur 610. Le capteur 610 fournit, par l'intermédiaire de la première unité de mémoires, un signal numérique représentatif de la vitesse V à la seconde unité de mémoires des moyens de correction. Une loi de variation de la tension d'alimentation du moteur de pulseur 410 qui est emmagasinée dans la seconde unité de mémoires est illustrée sur le diagramme (III) de la figure 2. Cette loi est définie par une ligne décroissante sensiblement droite, telle que pour une vitesse V égale à 0, la valeur de la correction ΔU2 (en volts) est maximale et qu'au-delà d'une certaine vitesse V la correction ΔU2 égale 0. En fonction de la vitesse mesurée, les moyens de correction ajustent la tension d'une valeur ΔU2 de façon que le débit d'air choisit reste constant, quelle que soit la vitesse du véhicule.

Le signal représentatif de la valeur de la tension d'alimentation du pulseur 410 corrigée d'après la température extérieure, l'écart entre les températures de consigne et intérieures, et la vitesse du véhicule est encore ajusté par les moyens de correction en fonction du niveau énergétique infrarouge dû au rayonnement solaire qui est mesuré par le capteur 612. La tension d'alimentation du pulseur est ajustée en fonction d'une loi de variation enregistrée dans la seconde unité de mémoires et dont un exemple est illustré sur le diagramme (IV) de la figure 2. Le diagramme (IV) indique que la valeur de la correction ΔU3 (en volts) augmente proportionnellement au niveau énergétique E′ mesuré par le capteur d'énergie 612. On obtient alors une tension d'alimentation 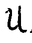 A ajustée automatiquement, qui est égale à la valeur U définie par les moyens de calcul à laquelle est soustraite la somme des corrections ΔU1, ΔU2, ΔU3 définies par les moyens de correction.

La valeur 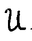 A est ensuite ajustée par les moyens de correction en fonction des réglages manuels mémorisés par l'utilisateur.

La position des volets de sélection 512, 513 et 514 définie généralement par les moyens de calcul comme expliqué plus haut est quant à elle ajustée par les moyens de correction en fonction de la température de l'air pulsé et de l'énergie mesurées par les capteurs 612, 631. A cet effet, la seconde unité de mémoires comporte des tables ou lois des changements de position des volets de sélection en fonction des signaux fournis aux moyens de correction par les capteurs 612 et 631. Une fois que cette correction est effectuée, la position des volets est encore ajustée en fonction des réglages manuels effectués par l'utilisateur, comme expliqué plus haut.

D'autre part, le calculateur 200 effectue, par exemple grâce à une horloge du calculateur 200 une lecture régulière de tous les paramètres de la climatisation ainsi que des réglages manuels, pour pouvoir réagir rapidement à tous changements de ceux-ci.

Evidemment, l'invention n'est nullement limitée aux modes de réalisation décrits et illustrés. Au contraire, celle-ci comprend tous les équivalents des moyens techniques décrits ainsi que leurs combinaisons, si ceux-ci sont effectués suivant son esprit.

## Revendications

1. Dispositif automatique de climatisation d'un habitacle de véhicule automobile, du type comprenant des circuits d'amenée d'air débouchant dans des ouies d'aération réparties à l'intérieur de l'habitacle (11), un pulseur d'air (410) et un ou deux échangeurs thermiques (411) pour fournir à l'habitacle de l'air climatisé à une température de consigne, au moins l'une des ouies comportant un volet de sélection pouvant ouvrir ou obturer cette ouie, ainsi qu'un calculateur (200) relié à des capteurs indiquant l'état de paramètres de la climatisation et à une interface de commande des volets de sélection, d'un moteur du pulseur et de l'échangeur, de façon à maintenir l'air climatisé à la température de consigne d'après l'état desdits paramètres, caractérisé en ce que le calculateur (200) comporte des moyens de calcul connectés à un organe de mesure de la température extérieure (611) et à des moyens de correction, ces moyens de correction étant reliés aux capteurs et à ladite interface de commande de sorte que les valeurs pour la tension d'alimentation (U) du moteur de pulseur (410) et pour la position des volets de sélection (512, 513, 514) sont déterminées par les moyens de calcul à partir de la température extérieure (T), puis sont ajustées par les moyens de correction en fonction de la température de consigne et de l'état des paramètres indiqué par les capteurs (610, 611, 612, 613, 631).

2. Dispositif selon la revendication 1, caractérisé en ce que le calculateur (200) comporte une première unité de mémoires raccordée à un capteur de température intérieure (613) et à une seconde unité de mémoires des moyens de correction, les valeurs de la température intérieure et un programme apte à déterminer l'écart entre (| |) entre les températures de consigne et intérieure ainsi que la loi de variation de cet écart étant respectivement emmagasinés dans les première et seconde unités afin que les moyens de correction ajustent la tension d'alimentation (U) du moteur (410) en fonction desdits écart et loi de variation.

3. Dispositif selon la revendication 2, caractérisé en ce qu'un capteur de vitesse du véhicule (610) est raccordé à la première unité de mémoires, une loi de variation (III) de la tension du moteur (410) suivant la vitesse mémorisée étant emmagasinée dans la seconde unité pour que les moyens de correction ajustent la tension de façon que le débit d'air choisi reste constant, quelle que soit la vitesse du véhicule (10).

4. Dispositif selon la revendication 2 ou 3, caractérisé en ce que la première unité de mémoires est raccordée à un capteur d'énergie (612) apte à mesurer le niveau énergétique infrarouge du rayonnement solaire et la seconde unité comporte en mémoire une loi de variation (IV) de la tension du moteur (410) suivant le niveau énergétique infrarouge mesuré, en fonction de laquelle loi les moyens de correction ajustent ladite tension.

5. Dispositif selon l'une des revendications 2 à 4, caractérisé en ce que la première unité de mémoires qui est connectée au capteur d'énergie (612) est également reliée à un capteur de température (631) de l'air pulsé, et la seconde unité comporte en mémoire des tables ou lois de changement des positions des volets de sélection suivant la température de l'air pulsé et l'énergie mesurées par lesdits capteurs (612, 631) pour que les moyens de correction ajustent les valeurs de la position des volets en fonction de ces paramètres.

6. Dispositif selon l'une des revendications 1 à 5, caractérisé en ce qu'il comporte des moyens de réglage (241, 251) manuel du débit et de la position des volets de sélection (512, 513, 514) qui sont raccordés aux moyens de correction précités par l'intermédiaire d'une troisième unité de mémoires, de sorte que les réglages effectués manuellement sont mémorisés dans ladite troisième unité

7. Dispositif selon la revendication 6, caractérisé en ce que ladite troisième unité de mémoire est constituée par un support à mémoire séparable du calculateur (200), tel qu'une carte à puce, et est raccordée au calculateur (200) à l'aide des moyens de lecture et d'écriture sur un tel support séparable.

8. Dispositif selon l'une des revendications 6 ou 7, caractérisé en ce que le calculateur comporte des moyens pour extrapoler d'après différents réglages manuels emmagasinés dans la troisième unité de mémoires, une valeur de réglage à fournir aux moyens de correction pour que ceux-ci ajustent automatiquement la tension du moteur de pulseur (410) et la position des volets de sélection (512, 513, 514) en fonction de l'état des paramètres et de ladite valeur extrapolée.
